(19) 

**Europäisches Patentamt**
**European Patent Office**
**Office européen des brevets**

(11) **EP 4 607 296 A1**

(12) **EUROPEAN PATENT APPLICATION**
published in accordance with Art. 153(4) EPC

(43) Date of publication:
**27.08.2025 Bulletin 2025/35**

(21) Application number: **23878870.7**

(22) Date of filing: **13.09.2023**

(51) International Patent Classification (IPC):
*G05B 13/04* (2006.01)

(52) Cooperative Patent Classification (CPC):
**G05B 13/04; Y02P 90/02**

(86) International application number:
**PCT/CN2023/118464**

(87) International publication number:
**WO 2024/082876 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 CN 202211264624**

(71) Applicants:
- **China Petroleum & Chemical Corporation Beijing 100728 (CN)**
- **Sinopec (Beijing) Research Institute of Chemical Industry Co., Ltd. Beijing 100013 (CN)**

(72) Inventors:
- **WEI, Guobin Beijing 100013 (CN)**

- **TIE, Kai Beijing 100013 (CN)**
- **PENG, Hui Beijing 100013 (CN)**
- **ZHANG, Lijun Beijing 100013 (CN)**
- **YANG, Chenxi Beijing 100013 (CN)**
- **MAO, Zuwang Beijing 100013 (CN)**
- **ZHANG, Liyan Beijing 100013 (CN)**
- **YI, Shuisheng Beijing 100013 (CN)**
- **LU, Hongliang Beijing 100013 (CN)**

(74) Representative: **karo IP Patentanwälte PartG mbB Steinstraße 16-18 40212 Düsseldorf (DE)**

(54) **CONTROL APPARATUS AND METHOD, AND MACHINE-READABLE STORAGE MEDIUM AND COMPUTER PROGRAM PRODUCT**

(57) This application relates to the field of automatic control technology, specifically to a control device, method, machine-readable storage medium, and computer program product for a reactor. The automatic control method for the reactor includes: obtaining the multi-level relevant parameters of the reactor; controlling the values of the parameters of each level according to the transfer functions between the multi-level relevant parameters from level to level, so that the specified parameters are within the preset range. The automatic control method for the reactor of the present invention can achieve the dynamic process adjustment and optimization of the multi-level variables of the reactor and, at the same time, achieve the stable operation of the reactor.

FIG. 1

**EP 4 607 296 A1**

# EP 4 607 296 A1

## Description

### Technical Field

This application relates to the field of process control technology, specifically to a control device, method, machine-readable storage medium, and computer program product for a reactor.

### Background

A reactor is an apparatus that is used to carry out a chemical reaction.it is used for single-phase reaction processes, for example liquid-phase reaction, or multi-phase reaction processes such as liquid-liquid, gas-liquid, liquid-solid, and gas-liquid-solid reactions. Currently, the process control of some reactors (such as a carbon-three fraction (C3) liquid-phase hydrogenation reactor) is generally manually regulated, with technicians manually adjusting relevant parameters. In the case of complex industrial process, due to limited human attention, it is impossible to achieve real-time monitoring and expert-level adjustment and optimized operation of the reactor.

Chinese Patent Publication CN113721683A discloses an automatic control method and apparatus for a C3 liquid-phase hydrogenation reactor. The automatic control method for the C3 liquid-phase hydrogenation reactor includes: obtaining the inlet and outlet data of the C3 liquid-phase hydrogenation reactor; obtaining the outlet MAPD concentration of the C3 liquid-phase hydrogenation reactor based on the inlet and outlet data; and adjusting the inlet material temperature of the C3 liquid-phase hydrogenation reactor and the inlet hydrogen-to-acetylene ratio of the C3 liquid-phase hydrogenation reactor in the inlet and outlet parameters to keep the outlet MAPD concentration within a set interval. In the prior art, a single variable direct control method is used to keep the outlet MAPD concentration within the set interval. The adjustment means are limited, and the adjustable variables are also limited. For example, adjusting the inlet hydrogen-to-acetylene ratio generally can only be achieved by adjusting the inlet hydrogen flow rate or concentration. Obviously, in this single-level direct control method, the types of adjustable parameters are limited, the adjustment method is not intuitive, and the adjustment results are not accurate enough.

### Summary

To solve the problems in the prior art, the goal of the embodiments of this application is to provide a control scheme for a reactor. This scheme can control the ranges of the parameters of multi-variable system, so that the specified parameters are within the preset ranges.

To achieve the above-mentioned goal, an embodiment of this application provides a control device comprising:

a memory for storing executable instructions; and
a processor configured to execute the executable instructions to implement a method of obtaining multi-level parameters of a reactor which comprise manipulation-level parameters, regulation-level parameters, and target-level parameters;
in response to the target-level parameters not being within a target preset range, determining an expected regulation range of the regulation-level parameters based on the target-level parameters and the target preset range;
determining an expected manipulation range of the manipulation-level parameters based on the expected regulation range of the regulation-level parameters; and
issuing a control command to control the manipulation-level parameters to fall within the manipulation expected range, thereby controlling the regulation-level parameters to fall within the regulation expected range, and ultimately controlling the target-level parameters to fall within the target preset range.

Further, the relationship between the regulation-level parameters and the target-level parameters is defined by a first-level function, such that the target-level parameters can be adjusted by controlling the values of the regulation-level parameters; and
the relationship between the manipulation-level parameters and the regulation-level parameters is defined by a second-level function, such that the regulation-level parameters can be adjusted by controlling the values of the manipulation-level parameters.

Optionally, the regulation-level parameters further comprise at least two levels of regulation parameters, and the relationship between the at least two levels of regulation parameters is defined by a function.
the dynamic process adjustment of multi-level variables is implemented based on a dynamic matrix predictive control algorithm.

In further embodiment, the reactor is a C3 liquid-phase hydrogenation reactor.

the manipulation-level parameters comprise inlet temperature $T_{in}$, inlet hydrogen flow rate $F_{H2}$, fresh material flow rate $F_{frs}$, recycle material flow rate $F_{rec}$, top reflux flow rate $F_{tow}$ of the depropanizer, depropanizer pressure $P_{tow}$, C3 hydrogenation reactor pressure P of the C3 liquid-phase hydrogenation reactor.

the regulation-level parameters comprise inlet MAPD concentration $C_{[MAPD]in}$, inlet hydrogen-to-acetylene ratio $C_{[C3H6]in/C[H2]in}$, temperature differences of each bed $TD_1$-$TD_n$ of the C3 liquid-phase hydrogenation reactor.

the target-level parameters comprise outlet MAPD concentration $C_{[MAPD]out}$ and propylene selectivity SE of the C3 liquid-phase hydrogenation reactor.

The target preset range of the outlet MAPD concentration $C_{[MAPD]out}$ is $x \pm (x \cdot y\%)$ ppm, and the target preset range of the propylene selectivity SE is SE≥S'-5%, Wherein S' is the optimal propylene selectivity value that can be obtained when the MAPD concentration is within the range of $x \pm (x \cdot y\%)$ ppm.

When the above conditions are not met, the regulation-level variables are adjusted.

Further, obtaining the multi-level parameters of the reactor includes obtaining the input and output parameters of the reactor and determining the multi-level parameters based on the input and output parameters.

the expected value of the inlet MAPD, INMAPD, is calculated by the dynamic matrix predictive control algorithm, in response to the inlet MAPD concentration being within INMAPD±0.02mol%, the manipulation-level variables are not adjusted, and in response to the inlet MAPD concentration not being within INMAPD±0.02mol%, at least one of the fresh material flow rate, recycle material flow rate, top reflux flow rate of the depropanizer, and depropanizer pressure of the manipulation-level variables is adjusted;

the expected value of the hydrogen-to-acetylene ratio, HM, is calculated by the dynamic matrix predictive control algorithm, in response to the hydrogen-to-acetylene ratio being within HM±0.025, the manipulation-level variables are not adjusted, and in response to the hydrogen-to-acetylene ratio not being within HM±0.025, at least one of the fresh material flow rate, inlet hydrogen flow rate, and recycle material flow rate of the manipulation-level variables is adjusted; and

the expected value of the bed temperature difference, TD, is calculated by the dynamic matrix predictive control algorithm, in response to the bed temperature difference being within TD±1°C, the manipulation-level variables are not adjusted, and in response to the bed temperature difference not being within TD±1°C, at least one of the inlet material temperature and the pressure of the C3 liquid-phase hydrogenation reactor of the manipulation-level variables is adjusted.

According to another aspect of the application, the embodiments of the application further refers to a control system comprising a reactor and the control device as above.

The control system further comprises: a DCS controller configured to obtain input and output parameters from the reactor, and an OPC server configured to realize communication between the DCS controller and the control device.

According to another aspect of the application, the embodiments of the application further refers to a control method for a reactor comprising:

obtaining multi-level parameters of a reactor which comprise manipulation-level parameters, regulation-level parameters, and target-level parameters;

in response to the target-level parameters not being within a target preset range, determining an expected regulation range of the regulation-level parameters based on the target-level parameters and the target preset range;

determining an expected manipulation range of the manipulation-level parameters based on the expected regulation range of the regulation-level parameters; and

controlling the manipulation-level parameters to fall within the manipulation expected range, thereby controlling the regulation-level parameters to fall within the regulation expected range, and ultimately controlling the target-level parameters to fall within the target preset range.

According to another aspect of the application, the application further refers to a machine-readable storage medium comprising a computer program stored thereon, wherein the computer program comprises executable instructions, which when executed by a processor, implement the method discussed above.

According to another aspect of the application, the application further refers to a computer program product comprising executable instructions which when executed by a processor, implement the method discussed above.

Through the above-mentioned technical solutions, the values of the parameters of each level of the reactor are automatically controlled level by level, making the adjustment of parameters intuitive, accurate, and rapid, so that the target-level parameters can be kept within the preset range. When the system fluctuates, the parameters of the production system can be quickly restored, and the stable operation of the reactor can be realized.

Other features and advantages of the embodiments of this application will be described in detail in the subsequent detailed description of the Embodiments.

**Brief Description of the Drawings**

The drawings illustrate various examples of the aspects of the present disclosure, and together with the description, they are used to explain the principles of this application. Those skilled in the technical field understand that the specific embodiments shown in the drawings are exemplary and do not intend to limit the scope of this disclosure. It should be recognized that in some examples, one element can also be separated into multiple elements, or multiple elements can be combined into one element. In some examples, an element shown as an internal component of another element can also be implemented as an external component of that another element, and vice versa. In the drawings:

Fig. 1 is an overall block diagram of a control system according to an embodiment of this application.
Fig. 2 shows a control process executed by a control server or a control device according to an embodiment of this application.
Fig. 3 shows a schematic diagram of the transfer functions of the parameters of the levels in the multi-level control process according to an embodiment of this application.
Fig. 4 shows a diagram of the relationship among the parameters of the levels of a C3 liquid-phase hydrogenation reactor according to an example of this application.
Fig. 5 is a block diagram of the structure of a control server or a control device according to an embodiment of this application.
Figs. 6A-6D are schematic diagrams of the multi-level control parameters of a C3 hydrogenation reactor changing with time in an embodiment of this application.

**Detailed Description of the Embodiments**

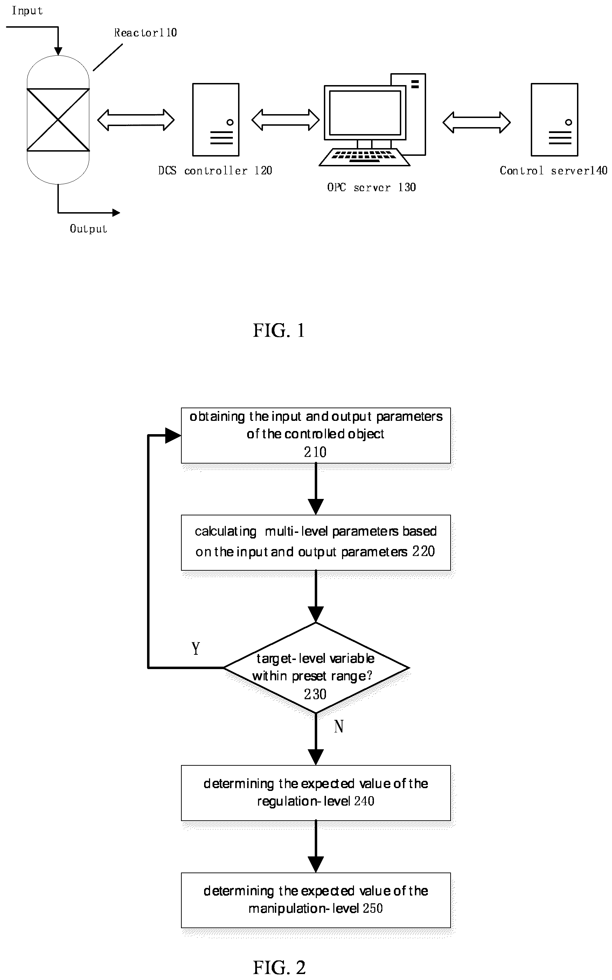

The following is a detailed description of the specific implementations of the embodiments of this application with reference to the drawings. It should be understood that the specific implementations described here are only used to illustrate and explain the embodiments of this application and are not used to limit the embodiments of this application.
As used hereinafter, the terms "have", "include", or "comprise", or any grammatical variations thereof, are used in a non-exclusive manner. Thus, in addition to the features introduced by these terms, these terms can means both the situation where there are no other features in the entity described in this context and the situation where there are one or more other features. For example, the expressions "A has B", "A includes B", and "A comprises B" can refer not only to the situation where there are no other elements in A except B (i.e., the situation where A consists only of B), but also to the situation where there are one or more other elements (such as element C, elements C and D, or even other elements) in entity A in addition to B.
In addition, it should be noted that the terms "at least one", "one or more", or similar expressions indicating that a feature or element can exist once or more than once are usually only used once when introducing the corresponding feature or element. Hereinafter, in most cases, when referring to the corresponding feature or element, although the corresponding feature or element can exist once or more than once, the expressions "at least one" or "one or more" may not be repeated.
In addition, as used hereinafter, terms such as "preferably", "more preferably", "particularly", "more particularly", "specifically", "more specifically", or similar terms are used in combination with optional features and do not limit alternative possibilities. Therefore, the features introduced by these terms are optional features and are not intended to limit the scope of the claims in any way. As those skilled in the art will recognize, this application can be implemented by using alternative features. Similarly, the features introduced by expressions such as "in an embodiment" or similar expressions are intended to be optional features, without any limitation to the alternative embodiments of this application, the scope of this application, or the possibility of combining the features introduced in this way with other optional or non-optional features of this application.
It will also be understood that although terms such as "first" and "second" are used herein to describe various elements, these elements should not be limited by these terms. These terms do not indicate an order but are only used to distinguish one element from another.
The control device and method of this application can be applied to controlled objects with complex industrial process, such as reactors. In this application, a C3 hydrogenation reactor is taken as an example, but this application is not limited thereto. Other types of controlled objects can adaptively adjust the technical solutions disclosed in this application according to specific reaction processes and process parameters to achieve automatic control.
Referring to Fig. 1, an overall block diagram of a control system according to an embodiment of this application is shown. The control system mainly includes a C3 hydrogenation reactor 110, a DCS controller 120, and a control server 140. Optionally, it can also include an OPC server 130.

The C3 hydrogenation reactor 110 is an important apparatus in the recovery system of a propylene plant. It converts MAPD in the C3 fraction into propylene through selective hydrogenation under the action of a catalyst. The DCS controller 120 is configured to monitor the C3 hydrogenation reactor 110. Specifically, the DCS controller 120 acquires various parameters or conditions in the C3 hydrogenation reactor 110 and controls the C3 hydrogenation reactor 110. The DCS controller 120 obtains various input and output parameters related to the C3 hydrogenation reactor 110 and transmits the obtained parameters to the control server 140 via the OPC server 130. The control server 140, also referred to as the control device 140, is configured to determine a control command based on the obtained various parameters and transmit the control command to the DCS controller 120 via the OPC server 130. Then, the DCS controller 120 can control the C3 hydrogenation reactor 110 based on the control command. The control server 140 can include a memory and a processor. The memory can store received data, intermediate data during program execution, and a computer program. The computer program includes executable instructions. The processor can execute the computer program stored in the memory to realize the functions of the control server 140. The OPC server 130 is used to establish an interface standard for communication among industrial control system application programs and establish a unified data access specification between industrial control system and control software. Those skilled in the art can understand that in this application, the OPC server 130 is not necessary but optional. In addition, the control server or control device 140 can also be located in the DCS controller 120.

Next, referring to Fig. 2, Fig. 2 shows a control process for a reactor executed by the control server or control device 140 in Fig. 1 according to an embodiment of this application. The control process disclosed in this application takes a C3 liquid-phase hydrogenation reactor as an example, and accordingly, the various parameters are the parameters of the C3 liquid-phase hydrogenation reactor. However, those skilled in the art should understand that other types of reactors or even other types of controlled objects can adaptively adjust the technical solutions disclosed in this application according to specific process flows and process parameters to achieve a similar automatic control process. That is to say, this control process can be applied to other reactors or even other types of controlled objects.

The control process of this application adopts a multi-level control approach, which can automatically control the parameters of the levels of the reactor from level to level to make the specified parameters within a preset range.

As shown in Fig. 2, first, at step 210, the control device obtains the input and output parameters of the controlled object. When the controlled object is a C3 liquid-phase hydrogenation reactor, the input and output parameters are the inlet and outlet parameters of the C3 liquid-phase hydrogenation reactor, which can include: inlet temperature $T_{in}$, outlet temperature $T_{out}$, temperatures of each bed $T_1$, $T_2$, $T_3$... $T_n$, temperature differences of each bed $TD_1$, $TD_2$, $TD_3$... $TD_n$, pressure of the C3 hydrogenation reactor P, fresh material flow rate $F_{frs}$, recycle material flow rate $F_{rec}$, inlet hydrogen flow rate $F_{H2}$, top reflux flow rate $F_{tow}$ of the depropanizer, depropanizer pressure $P_{tow}$, flow rate ratio of inlet hydrogen to fresh material $F_{H2}/F_{frs}$, inlet MAPD concentration $C_{[MAPD]in}$, inlet hydrogen concentration $C_{[H2]in}$, inlet propylene concentration $C_{[C3H6]in}$, inlet propane concentration $C_{[C3H8]in}$, inlet butadiene concentration $C_{[BD]in}$, outlet MAPD concentration $C_{[MAPD]out}$, outlet hydrogen concentration $C_{[H2]out}$, outlet propylene concentration $C_{[C3H6]out}$, outlet propane concentration $C_{[C3H8]out}$, and inlet hydrogen-to-acetylene ratio $C_{[C3H6]in/C[H2]in}$, etc.

Then, at step 220, the control device obtains relevant multi-level parameters based on the input and output parameters. The multi-level parameters include manipulation-level parameters, regulation-level parameters, and target-level parameters. The relationship between the regulation-level parameters and the target-level parameters is defined by a first-level function relationship (such as a first-level transfer function, but not limited thereto). The regulation-level parameters can be controlled to make the target-level parameters within the target preset range. The relationship between the regulation-level parameters and the manipulation-level parameters is defined by a second-level function relationship (such as a second-level transfer function, but not limited thereto). The values of the manipulation-level parameters can be controlled to make the regulation-level parameters within the regulation preset range. It can be seen that the manipulation-level parameters are directly manipulable parameters, while the change of the regulation-level parameters needs to be achieved by adjusting the manipulation-level parameters, and the change of the target-level parameters needs to be achieved by adjusting the regulation-level parameters.

Therefore, the control principle of the multi-level parameters can be as follows: according to the difference between the real value and / or change trend of the target-level parameters and the target-level preset value or preset range, based on the first-level transfer function, determining the expected value or range of the regulation-level parameters, or the expected adjustment step length and adjustment direction; next, according to the expected value or range of the regulation-level parameters, or the expected adjustment step length and adjustment direction, based on the second-level transfer function, determining the expected manipulation value or range of the manipulation-level parameters, or the expected adjustment step length and adjustment direction; then, adjusting the manipulation-level parameters. Through the control of the above-mentioned multiple levels, ensure that the specified target-level parameters are within the preset target range, and at the same time, achieve the automatic and stable operation of the reactor.

In the case where the C3 liquid-phase hydrogenation reactor is taken as an example in this application, the multi-level parameters include: manipulation-level parameters, including, for example, inlet temperature $T_{in}$, inlet hydrogen flow rate $F_{H2}$, fresh material flow rate $F_{frs}$, recycle material flow rate $F_{rec}$, top reflux flow rate $F_{tow}$ of the depropanizer, depropanizer pressure $P_{tow}$, C3 hydrogenation reactor pressure P, etc.; regulation-level parameters, including, for example, inlet MAPD concentration $C_{[MAPD]in}$, inlet hydrogen-to-acetylene ratio $C_{[C3H6]in/C[H2]in}$, temperature differences of each bed $TD_1$-$TD_n$, etc.; and target-level parameters, including, for example, outlet MAPD concentration $C_{[MAPD]out}$ and propylene selectivity SE, etc.

In this embodiment, the fresh material flow rate $F_{frs}$ refers to the material flow rate input from the upstream of the system, and the recycle material flow rate $F_{rec}$ refers to the material flow rate returning from the outlet of the C3 liquid-phase hydrogenation reactor to the inlet. The inlet MAPD concentration is the content of methylacetylene (MA) and allene (PD) in the inlet material of the C3 liquid-phase hydrogenation reactor, specifically the volume content. The outlet MAPD concentration is the content of methylacetylene (MA) and allene (PD) in the outlet material of the C3 liquid-phase hydrogenation reactor, specifically the volume content. The propylene selectivity is calculated by the following equation:

$$Propylene\ selectivity = \frac{(Outlet\ propylene\ mole\ percentage - Inlet\ propylene\ mole\ percentage)}{(Inlet\ MAPD\ mole\ percentage - Outlet\ MAPD\ mole\ percentage)} \times 100$$

The predetermined first-level transfer function and the second-level transfer function are stored in the control device. Similarly, in the case of taking the C3 liquid-phase hydrogenation reactor as an example, the transfer functions between the relevant parameters of levels are obtained through the identification and modeling of the C3 liquid-phase hydrogenation reaction process characteristics. The first-level transfer function between the target-level parameters and the regulation-level parameters is:

$$\begin{bmatrix} C_{[MAPD]out}(t) \\ SE(t) \end{bmatrix} = \begin{bmatrix} N_{41} & N_{42} & N_{43} \\ N_{51} & N_{52} & N_{53} \end{bmatrix} \begin{bmatrix} C_{[MAPD]in}(t) \\ C_{[H2]in}(t)/C_{[MAPD]in}(t) \\ TD_n(t) \end{bmatrix}$$

The second-level transfer function between the regulation-level parameters and the manipulation-level parameters is:

$$\begin{bmatrix} C_{[MAPD]in}(t) \\ C_{[H2]in}(t)/C_{[MAPD]in}(t) \\ TD_n(t) \end{bmatrix} = \begin{bmatrix} 0 & 0 & N_{13} & N_{14} & N_{15} & 0 \\ N_{21} & N_{22} & N_{23} & 0 & 0 & 0 \\ 0 & N_{32} & 0 & 0 & 0 & N_{36} \end{bmatrix} \times \begin{bmatrix} F_{H2}(t) \\ T_{in}(t) \\ F_{frs}(t) \\ F_{rec}(t) \\ F_{tow}(t) \\ P(t) \end{bmatrix}$$

where $N_{ij} = Q \cdot \frac{c_{ij}s+1}{a_{ij}s^2+b_{ij}s+1}$, $N_{ij}$ is the identification parameter, Q is the weight coefficient of the identification parameter, s is the identification model factor, and $a_{ij}$, $b_{ij}$, and $c_{ij}$ are the identification model constants.

In the first-level transfer function, the regulation-level variables are set as the control variables, and the target-level variables are set as the controlled variables. In the second-level transfer function, the manipulation-level variables are set as the control variables, and the regulation-level variables are set as the controlled variables. It should be noted that in this application, the manipulation-level variables, regulation-level variables, and target-level variables are equivalent to the manipulation-level parameters, regulation-level parameters, and target-level parameters. That is to say, the terms "variable" and "parameter" are synonymous and can be used interchangeably.

Next, continue to refer to Fig. 2. At step 230, the control device determines whether the calculated value of the target-level variable is within the target preset range. When the C3 liquid-phase hydrogenation reactor is the controlled object, assume that the expected value of the outlet MAPD concentration $C_{[MAPD]out}$ of the target-level variable (MV) is x, and the target preset range is $x\pm(x\cdot y\%)$ ppm. The value range of x is preferably from 10 to 500, and more preferably is 400. The value range of y is preferably from 5 to 20.

The value of the propylene selectivity (SE) of the target-level variable (MV) is s, and the target preset range is $s\geq z$ %. The value range of z is preferably 50-90, and more preferably 80. Alternatively, z can be determined in the following way: solving for the optimal propylene selectivity (S') when the MAPD concentration value is within the range of $x\pm(x\cdot y\%)$ ppm, and then z %=S'-5%.

When the outlet MAPD concentration $C_{[MAPD]out}$ is within the range of $x\pm(x\cdot y\%)$ ppm and the propylene selectivity (SE)≥z%, that is, when it is determined at step 230 that the target-level variable is within the target preset range, there is no need to adjust the regulation-level variables, and the control process returns to step 210. The control device continues to obtain the input and output parameters of the controlled object.

When the outlet MAPD concentration $C_{[MAPD]out}$ is within the range of x±(x•y%) ppm and the propylene selectivity (SE) < z %, that is, when it is determined at step 230 that the target-level variable is not within the target preset range, it is necessary to adjust the regulation-level variables. As shown in Fig. 2, the control process proceeds to step 240. At step 240, the control device determines the expected regulation value or expected adjustment step length and adjustment direction of the regulation-level parameters based on the difference between the value and / or change trend of the target-level parameters determined at step 220 and the target-level preset range or / and preset value, and based on the first-level transfer function. Then, the control process proceeds to step 250. At step 250, the control device determines the expected manipulation value or expected adjustment step length and adjustment direction of the manipulation-level parameters based on the expected regulation value or expected adjustment step length and adjustment direction of the regulation-level parameters, and based on the second-level transfer function. Then, according to the determined expected manipulation value or expected adjustment step length and adjustment direction of the manipulation-level parameters, the control device issues a command to adjust the manipulation-level parameters, so that the regulation-level parameters can realize the expected regulation value or range, or the expected adjustment step length and adjustment direction, and thus make the target-level parameters within the target preset range.

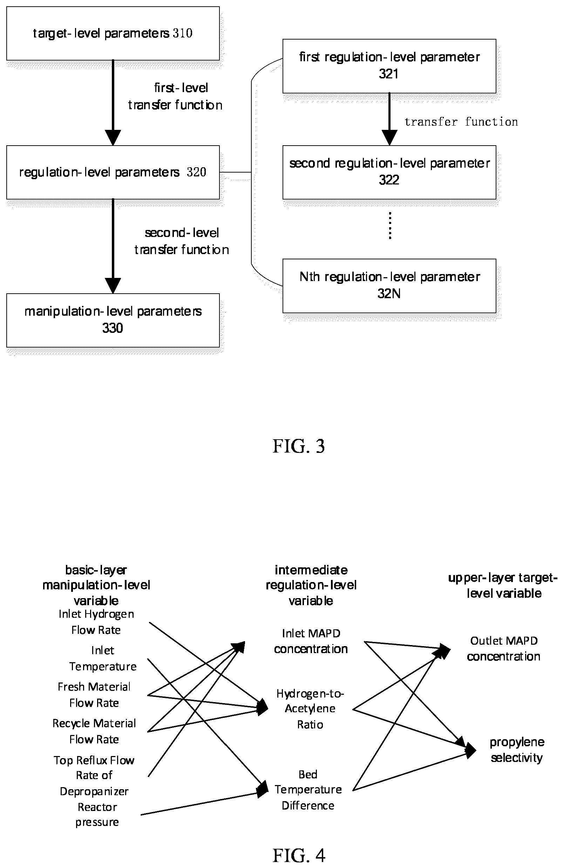

Fig. 3 shows a schematic diagram of the transfer functions of the level parameters in the multi-level control process according to an embodiment of this application. As shown in the figure, the relationship between the regulation-level parameters 320 and the target-level parameters 310 is defined by a first-level transfer function. The values of the regulation-level parameters can be controlled to make the target-level parameters within the target preset range. The relationship between the regulation-level parameters 320 and the manipulation-level parameters 330 is defined by a second-level transfer function. The values of the manipulation-level parameters 330 can be adjusted to control the values of the manipulation-level parameters, so as to make the regulation-level parameters within the regulation preset range. In addition, according to the levels where the level parameters are located, the target-level parameters can also be called upper-layer target-level parameters, the regulation-level parameters can be called middle-layer regulation-level parameters, and the manipulation-level parameters are called basic-layer manipulation-level parameters.

For example, as described in Fig. 3, during the reaction, the hydrogen-to-acetylene ratio is affected by the inlet hydrogen flow rate, fresh material flow rate, recycle material flow rate, etc. In the real reaction, since the recycle material has some temperature, it may affect the temperature of the reactor. The parameters are mutually coupled and affect each other, and the relationship is complex. In this disclosure, through the two-level transfer functions, the target values of the manipulation-level parameters can be obtained intuitively and accurately through level-by-level control, making the control more direct, flexible, accurate, and rapid.

The technical solution in this application performs a level-by-level control by a multi-level control approach, which is especially suitable for controlled objects with complex industrial process, such as the C3 liquid-phase hydrogenation reactor exemplified in this application.

In addition, the multi-level control approach in this application is not limited to three levels. As shown in Fig. 3, the regulation-level parameters 320 can also further include multiple levels of parameters, for example, the first regulation-level parameter 321, the second regulation-level parameter 322... the Nth regulation-level parameter 32N. The relationships between these regulation-level parameters are also defined by corresponding transfer functions. Therefore, the multi-level control approach of this application can be a four-level or even more-level control process.

In this embodiment, the control method for the level variables is implemented based on a level-by-level multi-step control method. For example, assume that the control goal of the target-level parameters are: the outlet MAPD of 400, and the selectivity of 70%. The detected real parameters are: the outlet MAPD of 657, and the selectivity of 39.7%. At this time, the control device does not directly control the outlet MAPD of 657 and the selectivity of 39.7% to the outlet MAPD of 400 and the selectivity of 70% by adjusting the manipulation-level parameters. Because the current real outlet MAPD of 657 and the selectivity of 39.7% are far from the target range. If they are directly controlled to the target value, excessive oscillation of the system may be caused, resulting in system disturbances and impacts. In the technical solution of this application, a step-by-step method is adopted. The manipulation parameters are adjusted gradually in multiple steps, so that the target-level parameters gradually approach the target control range, thereby avoiding excessive impacts on the system. In order to achieve this optimal control of gradually approaching the target control range, the technical solution of this application adopts the dynamic matrix predictive control (DMC) algorithm. The dynamic matrix predictive control algorithm is a type of model predictive control (MPC). The DMC algorithm uses the step-response curve of the system.

The following is an example to illustrate the dynamic matrix predictive control algorithm:

Step 1: Setting the prediction step length $P$, control step length $i$, and the expected value $W$ of the controlled variable; Obtaining the model vector L and the dynamic matrix A from the identification model; Setting the correction matrix H, shift matrix S, error weight matrix Q, and control weight matrix R;

Step 2: Starting from the current time k, detecting the real output value y(k) of the controlled variable and assigning it to the predicted value $\tilde{y}(k + i)$ of the controlled variable, where $i = 1,2, \ldots , P$; Detecting the expected value w(k) of the controlled variable and assigning it to the expected value w(k + i) of the controlled variable, where $i = 1,2, \ldots , P$; Detecting the real output value u(k) of the control variable and assigning it to the initial value u(k + i) of the control variable, where $i = 1,2, \ldots , P$;

Step 3: When the time runs to k + 1, detecting the real output value y(k + 1) of the controlled variable and calculating the prediction error $e$.

$$e(k + 1 + i) = y(k + 1 + i) - \tilde{y}(k + 1 + i|i), \quad i = 1,2, \ldots , P$$

Step 4: Predicting the correction value

$$\tilde{y}'(k + i + 1) = \tilde{y}(k + i) + He(k + i + 1), \quad i = 0,1,2, \ldots , P$$

Step 5: by virtue of the shift setting, setting the predicted correction value of the controlled variable at time k + 1 as the predicted value of the controlled variable at the current time k; Setting the expected value of the controlled variable at time k + 1 as the expected value of the controlled variable at the current time k; and setting the value of the control variable at time k + 1 as the value of the control variable at the current time k.

$$\tilde{y}(k + i) \leftarrow S\tilde{y}'(k + i + 1), \quad i = 1,2, \ldots , P$$

$$w(k + i) \leftarrow Sw(k + i + 1), , \quad i = 1,2, \ldots , P$$

$$u(k + i) \leftarrow Su(k + i + 1), \quad i = 1,2, \ldots , P$$

Step 6: At this time, from the expected value w(k + i) of the controlled variable at the current time k and the predicted value $\tilde{y}(k + i)$ of the controlled variable, the increment $\Delta u(k + i)$ $i = 1,2, \ldots , P$ of the control variable can be calculated:

$$\Delta u(k + i) = D[w(k + i) - \tilde{y}(k + i)], \quad i = 1,2, \ldots , P$$

Wherein $D=L(A^TQA+R)^{-1}A^TQ$

Step 7: Calculating the control amount and output

$$u(k + i) = u(k + i - 1) + \Delta u(k + i) \quad i = 1,2, \ldots , P$$

Step 8: Calculating the predicted output value of the controlled variable at the next time k + 1.

$$\tilde{y}(k + i + 1) = \tilde{y}(k + i) + A\Delta u(k + i), \quad i = 1,2, \ldots , P$$

Step 9: When the time runs to k + 1, jumping back to Step 4 to start the dynamic optimization control process.

In the above steps, the controlled variable, the control variable, and the functional relationship between the controlled variable and the control variable correspond to the controlled variable, the control variable, and the functional relationship between the controlled variables and the control variables in the first-level transfer function and the second-level transfer function.

In this embodiment, the expected value or set value (INMAPD) of the inlet MAPD is calculated by the step-response model of the dynamic matrix predictive control algorithm.

When the inlet MAPD concentration is within INMAPD±0.02mol%, the lower-layer manipulation-level variables are not adjusted. When the inlet MAPD concentration is not within INMAPD±0.02mol%, the lower-layer manipulation-level variables are adjusted.

The inlet MAPD concentration may correspond to the adjusted lower-layer operating variables, including: the fresh material flow rate and/or recycle material flow rate of C3 liquid-phase hydrogenation reactor, and/or top reflux flow rate and/or pressure of the depropanizer.

In this embodiment, the expected value or set value (HM) of the hydrogen-to-acetylene ratio is calculated as output value by the step-response model of the dynamic matrix predictive control algorithm.

When the hydrogen-to-acetylene ratio is within HM±0.025, the lower-layer manipulation-level variables are not adjusted. When the hydrogen-to-acetylene ratio is not within HM±0.025, the lower-layer manipulation-level variables is adjusted.

The hydrogen-to-acetylene ratio may correspond to the adjusted lower-layer manipulation-level variables including fresh material flow rate and / or inlet hydrogen flow rate and / or recycle material flow rate of the C3 liquid-phase hydrogenation reactor.

In this embodiment, the expected value or set value (TD) of the bed temperature difference is calculated as output by the step-response model of the dynamic matrix predictive control algorithm.

When the bed temperature difference is within TD±1°C, the lower-layer manipulation-level variables are not adjusted. When the bed temperature difference is not within TD±1°C, the lower-layer manipulation-level variables are adjusted.

The bed temperature difference may correspond to the adjusted lower-layer manipulation-level variables including the inlet material temperature and the pressure of the C3 hydrogenation reactor.

The specific relationships between the level parameters in the C3 hydrogenation reactor can be seen in Fig. 4, which shows a diagram of the relationships between the level parameters of the C3 liquid-phase hydrogenation reactor according to an example of this application.

According to another aspect of this application, a control method is also involved. The steps of this control method can be referred to Fig. 2 again and the description of the control process above. It will not be repeated here.

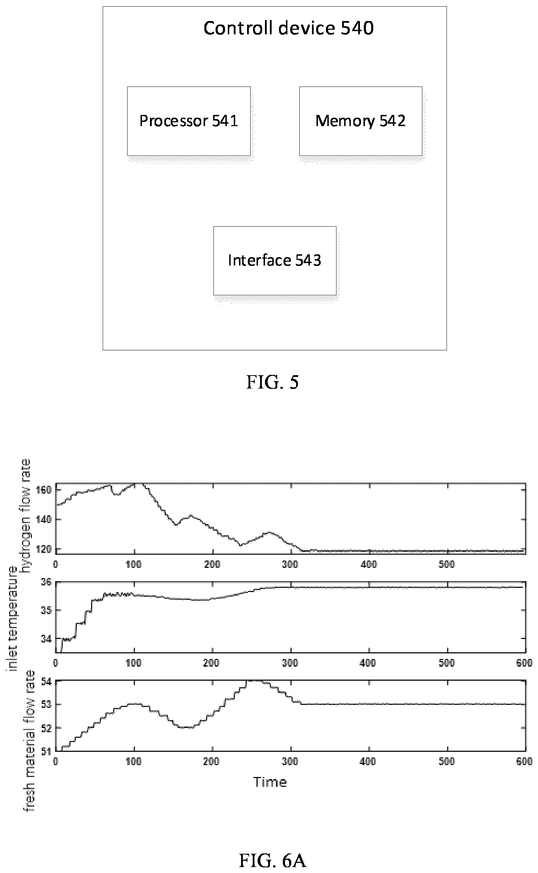

Next, referring to Fig. 5, a block diagram of the structure of a control server or control device 540 according to an embodiment of this application is shown. This control device can be used to implement the control method shown in Fig. 2. The control device 540 includes a processor 541, a memory 542, and an interface 543. The processor 541 realizes the operation of the control device 540 by executing computer-executable instructions that define the control operations shown in Fig. 2. A computer program product including computer-executable instructions can be stored in the memory 542. The method described in Fig. 2 can be defined by the computer-executable instructions included in the computer program product stored in the memory 542 and controlled by the processor 541 that executes these computer-executable instructions. The interface 543 can include a network interface for communicating with other devices via a network. This interface can also include other input/output apparatus (such as a display, keyboard, mouse, speaker, button, touchpad, touch screen, etc.) that enable users to interact with the control device 540. Those skilled in the art will recognize that the implementation of a computer can also include other components, and Fig. 5 is a high-level representation of some components of such a computer for illustrative purposes.

The memory 542 includes a tangible non-transitory machine-readable storage medium and/or high-speed random-access memory, such as dynamic random-access memory (DRAM), static random-access memory (SRAM), double-data-rate synchronous dynamic random-access memory (DDR RAM), or other random-access solid-state memory devices, and can include non-volatile memory, such as one or more disk storage devices (such as internal hard disks and removable disks), magneto-optical disk storage devices, optical disk storage devices, flash memory devices, semiconductor memory devices (such as erasable programmable read-only memory (EPROM), electrically erasable programmable read-only memory (EEPROM)), compact disc read-only memory (CD-ROM), digital versatile disc read-only memory (DVD-ROM) discs, or other non-volatile solid-state storage devices.

In another embodiment, the method described in Fig. 2 above can be implemented in a network-based cloud computing system. In such a network-based cloud computing system, a server communicates with the control device 540 via a network. The control device 540 can store the received data and/or program instructions on the server and access the data and/or program instructions via the network. The control device 540 can transmit data requests or online service requests to the server via the network. The server can implement the requested services and provide data to the control device 540. The server can also transmit data adapted to enable the control device 540 to implement specified functions (such as performing calculations, displaying specified data on the screen, etc.). Some steps of the above-mentioned method can be implemented by the server or other computers/processors in the network-based cloud computing system. Some steps of the above-mentioned method can be implemented locally by the client computer in the network-based cloud computing system. The steps of the above-mentioned method can be implemented by one or more devices in the network-based cloud computing system or by the local client computer in any combination.

To further illustrate the technical solution of this application, the following describes the schematic diagrams of the multi-level control parameters of a C3 hydrogenation reactor changing with time in a specific embodiment of this application with reference to Figs. 6A-6D. Through the method of this application, the control variables of each level are optimized and adjusted, so that the outlet MAPD has target adjustability, strong control ability, and good stability, and the propylene selectivity is significantly improved.

Specifically, the implementation process of this embodiment is as follows:
The goal to be achieved in the field implementation is to obtain an outlet MAPD with a concentration of 400 ppm. Therefore, it is necessary to set the outlet MAPD value to 400 and the selectivity to 80.

Two-layer control is achieved through the following first-level and second-level transfer functions respectively.

The first-layer control corresponds to the model of the second-level transfer function controlling the manipulation-level variables to adjust the regulation-level variables. The second-layer control corresponds to the model of the first-level transfer function controlling the regulation-level variables to adjust the target-level variables.

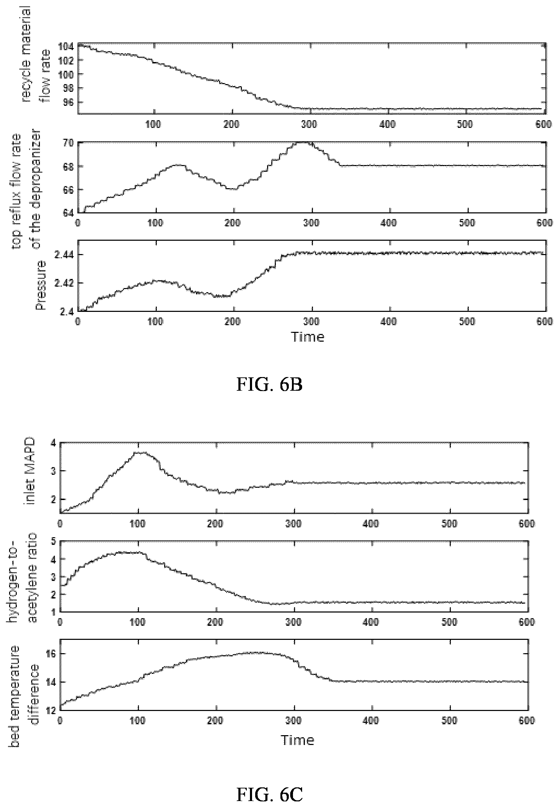

In the first-layer control, the initial values of each basic-layer manipulation-level variable and the intermediate regulation-level variable are shown in Tables 1 and 2 below, and the changing curves of each variable are shown in Figs. 6A, 6B, and 6C.

Table 1

| Manipul ation Variable | Hydroge n Flow Rate | Inlet Temper ature | Fresh Material Flow Rate | Recycle Material Flow Rate | Top Reflux Flow Rate of Depropa nizer | Pre ssu re |
|---|---|---|---|---|---|---|
| Value | 150 | 33.5 | 51 | 104 | 64 | 2.4 |

Table 2

| Intermediat e Variable | Inlet MAPD | Hydrogen-to-Acetylene Ratio | Bed Temperature |
|---|---|---|---|
| Value | 1.54 | 2.5 | 12.4 |

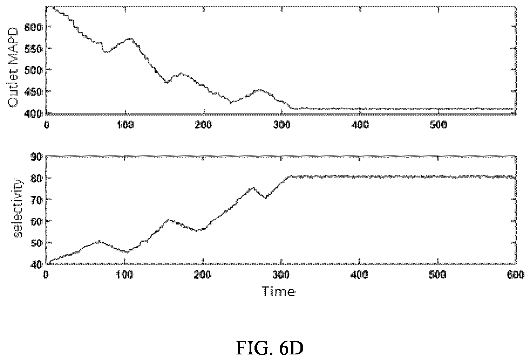

In the second-layer control, the control goal are: the outlet MAPD of 400, and the selectivity of 70%. The initial values of each intermediate regulation-level variable and the upper-layer target-level variable detected are shown in Table 3 below, and the changing curves of each variable are shown in Fig. 6D.

Table 3

| Inlet MAPD | Hydrogen-to-Acetylene Ratio | Bed Temperature | Outlet MAPD | Selectiv ity |
|---|---|---|---|---|
| 1.54 | 2.5 | 12.4 | 657 | 39.7 |

Upon the control of the two-layer DMC control processor, the final control effect is shown in Table 4 below. It can be seen that a relatively ideal control effect has been achieved.

Table 4

| Outlet MAPD | Selectivity |
|---|---|
| 398 | 81.1 |

The following specifically analyzes the changes in the values of each variable during the control process.

The corresponding relationship between the regulation-level variables and the controlled target-level variables is shown in Table 5 below (it can also be seen in Fig. 4).

Table 5

| Intermediate Regulation Variable(Control Variable) | Upper-Layer Target Variable (Controlled Variable) |
|---|---|
| Inlet MAPD | Outlet MAPD, Selectivity |
| Hydrogen-to-Acetylene Ratio | Outlet MAPD, Selectivity |
| Bed Temperature Difference | Outlet MAPD, Selectivity |

The industrial data of the device is fitted and identified to obtain the first-level transfer function as follows:

$$\begin{bmatrix} c[MAPD]_{out}(t) \\ SE(t) \end{bmatrix} = \begin{bmatrix} -0.00735\dfrac{15s+1}{50.4s^2+12s+1} & -0.00634\dfrac{16s+1}{43s^2+11s+1} & -0.0075\dfrac{13s+1}{25s^2+12s+1} \\ -0.00434\dfrac{13s+1}{45s^2+11s+1} & -0.0045\dfrac{14s+1}{30s^2+13s+1} & -0.00534\dfrac{21s+1}{35s^2+20s+1} \end{bmatrix}\begin{bmatrix} c[MAPD]_{in}(t) \\ C_{H_2}(t)/C_{MAPD}(t) \\ T_{bed}(t) \end{bmatrix}$$

When the prediction step length P = 50 and there are 50 consecutive control increments starting from time k, the control processor obtains the control increment Δu(k+i) of each intermediate variable. The predicted output of the upper-layer target variable at each future time is $\tilde{y}(k+i+1)$.

The following is $\Delta u(k+i)$, $\tilde{y}(k+2)$ for time i = 1:

$$\Delta u(k+1) = \begin{bmatrix} \Delta u_{Inlet\ MAPD}\ (k+1) \\ \Delta u_{Hydrogen-to-Acetylene\ Ratio}\ (k+1) \\ \Delta u_{Bed\ temperature}\ (k+1) \end{bmatrix} = \begin{bmatrix} 0.006794 \\ 0.009613 \\ 0.05428 \end{bmatrix}$$

$$\tilde{y}(k+2) = \begin{bmatrix} \tilde{y}_{(Outlet\ MAPD)}(2) \\ \tilde{y}_{(Selectivity)}(2) \end{bmatrix} = \begin{bmatrix} 648.7 \\ 42 \end{bmatrix}$$

The corresponding relationship between the basic-layer manipulation variables and the intermediate regulation variables is shown in Table 6 below (it can also be seen in Fig. 4).

Table 6

| Basic-Layer Manipulation-Level Variable (Control Variable) | Intermediate Regulation-Level Variable (Controlled Variable) |
| --- | --- |
| Inlet Hydrogen Flow Rate | Hydrogen-to-Acetylene Ratio |
| Inlet Temperature | Bed Temperature Difference |
| Fresh Material Flow Rate | Inlet MAPD, Hydrogen-to-Acetylene Ratio |
| Recycle Material Flow Rate | Inlet MAPD, Hydrogen-to-Acetylene Ratio |
| Top Reflux Flow Rate of Depropanizer | Inlet MAPD |
| Reactor Pressure | Bed Temperature Difference |

The industrial data of the device is fitted and identified to obtain the second-level transfer function as follows:

$$\begin{bmatrix} c[MAPD]_{in}(t) \\ C_{H_2}(t)/C_{MAPD}(t) \\ T_{bed}(t) \end{bmatrix} = \begin{bmatrix} 0 & 0 & 0.0849\frac{1}{2s^2+5s+1} & 0.0745\frac{1}{1.75s^2+3.4s+1} & -0.00846\frac{13s+1}{54.8s^2+14.8s+1} & 0 \\ -0.0213\frac{-8.65s+1}{1.55s^2+4.3s+1} & 0.00564\frac{1}{2.5s^2+5.6s+1} & 0.00535\frac{1}{1.49s^2+2.3s+1} & 0 & 0 & 0 \\ 0 & 0.0054\frac{1}{31s^2+21s+1} & 0 & 0 & 0 & 0.919\frac{1}{1.55s^2+2.49s+1} \end{bmatrix} \times \begin{bmatrix} Q_{H_2}(t) \\ T_0(t) \\ Q_{new}(t) \\ Q_{circle}(t) \\ Q_{back}(t) \\ N(t) \end{bmatrix}$$

When the prediction step length P = 50 and there are 50 consecutive control increments starting from the previous time k, the control processor obtains the control increment Δu(k+i) of each manipulation variable.

The following is Δu(k+1) at time i = 1:

$$\Delta u(k+1) = \begin{bmatrix} \Delta u_{Hydrogen\ Flow\ Rate}(k+1) \\ \Delta u_{Inlet\ Temperature}(k+1) \\ \Delta u_{Fresh\ Material\ Flow\ Rate}\ (k+1) \\ \Delta u_{Recycle\ Material\ Flow\ Rate}(k+1) \\ \Delta u_{Top\ Reflux\ Flow\ Rate\ of\ Depropanizer}(k+1) \\ \Delta u_{Pressure}(k+1) \end{bmatrix} = \begin{bmatrix} 0.2006 \\ 0.1329 \\ 0.0847 \\ -0.2666 \\ 0.4049 \\ 0.0012 \end{bmatrix}$$

At time i = 1, the control increment may change the values of the basic-layer manipulation variables, thereby change the values of the controlled variables.

$$u(k+1) = \begin{bmatrix} u_{\text{Hydrogen Flow Rate}}\ (k+1) \\ u_{\text{Inlet Temperature}}\ (k+1) \\ u_{\text{Fresh Material Flow Rate}}\ (k+1) \\ u_{\text{Recycle Material Flow Rate}}\ (k+1) \\ u_{\text{Top Reflux Flow Rate of Depropanizer}}\ (k+1) \\ u_{Pressure}\ (k+1) \end{bmatrix} = \begin{bmatrix} 150.5784 \\ 33.6192 \\ 51.0847 \\ 104.7334 \\ 64.4049 \\ 2.4012 \end{bmatrix}$$

At the time i = 2, the real values of the controlled variables are collected:

$$y(k+2) = \begin{bmatrix} y_{\text{Outlet MAPD}}(2) \\ y_{\text{Selectivity}}(2) \end{bmatrix} = \begin{bmatrix} 648.3 \\ 41.7 \end{bmatrix}$$

The predicted value of the model and the real value are used for feedback correction to correct the prediction of the future output, and the corrected predicted value $\hat{y}(k+3)$ for the next time i = 3 is obtained:

$$\hat{y}(k+3) = \begin{bmatrix} \hat{y}_{\text{(Outlet MAPD)}}(k+3) \\ \hat{y}_{\text{(Selectivity)}}(k+3) \end{bmatrix} = \begin{bmatrix} 648.1 \\ 42.8 \end{bmatrix}$$

At the time i = 2, the iterative optimization starts, and $\Delta\ddot{u}(k+2)$, $\tilde{y}(k+3)$, $\Delta\hat{u}(k+3)$, $\hat{u}(k+3)$ are obtained. Then the optimization process for the time i = 3 starts.

The effect of level-by-level multi-step automatic optimization control is shown in Fig. 6D. The final control effect is shown in Table 7 below, achieving a relatively ideal control effect.

Table 7

| Outlet MAPD | Selectivity |
|---|---|
| 408 | 81 |

It should be recognized that for the sake of clarity, certain features of this application described in the context of separate embodiments can also be provided in combination in a single embodiment. On the contrary, for the sake of simplicity, the various features of this application described in the context of a single embodiment can also be provided separately, in any suitable subcombination, or appropriately provided in any other embodiments of this application. Certain features described in the context of various embodiments should not be regarded as essential features of those embodiments unless the embodiment is ineffective without those elements.

Although this application has been described in conjunction with specific embodiments of this application, it is obvious that many substitutions, modifications, and variations will be apparent to those skilled in the art in light of this application. Therefore, it is intended to cover all such substitutions, modifications, and variations that fall within the spirit and broad scope of the appended claims.

All publications, patents, and patent applications mentioned in this specification are incorporated herein by reference in their entirety, with the same degree of citation as if each individual publication, patent, or patent application was specifically and particularly indicated to be incorporated by reference herein. In addition, the citation or identification of any reference in this application should not be construed as an admission that such reference can be used as prior art for this application. When using section headings, they should not be construed as necessarily restrictive.

**Claims**

1. A control device, comprising:

a memory for storing executable instructions; and
a processor configured to execute the executable instructions to implement a method of
obtaining multi-level parameters of a reactor which comprise manipulation-level parameters, regulation-level parameters, and target-level parameters;
in response to the target-level parameters not being within a target preset range, determining an expected regulation range of the regulation-level parameters based on the target-level parameters and the target preset range;

determining an expected manipulation range of the manipulation-level parameters based on the expected regulation range of the regulation-level parameters; and

issuing a control command to control the manipulation-level parameters to fall within the manipulation expected range, thereby controlling the regulation-level parameters to fall within the regulation expected range, and ultimately controlling the target-level parameters to fall within the target preset range.

2.  The control device according to claim 1, wherein:

    the relationship between the regulation-level parameters and the target-level parameters is defined by a first-level function, such that the target-level parameters can be adjusted by controlling the values of the regulation-level parameters; and

    the relationship between the manipulation-level parameters and the regulation-level parameters is defined by a second-level function, such that the regulation-level parameters can be adjusted by controlling the values of the manipulation-level parameters.

3.  The control device according to claim 2, wherein the regulation-level parameters further comprise at least two levels of regulation parameters, and the relationship between the at least two levels of regulation parameters is defined by a function.

4.  The control device according to any one of claims 1-3, wherein the dynamic process adjustment of multi-level variables is implemented based on a dynamic matrix predictive control algorithm.

5.  The control device according to claim 4, wherein the reactor is a C3 liquid-phase hydrogenation reactor.

6.  The control device according to claim 5, wherein:

    the manipulation-level parameters comprise inlet temperature $T_{in}$, inlet hydrogen flow rate $F_{H2}$, fresh material flow rate $F_{frs}$, recycle material flow rate $F_{rec}$, top reflux flow rate $F_{tow}$ of the depropanizer, depropanizer pressure $P_{tow}$, C3 hydrogenation reactor pressure $P$ of the C3 liquid-phase hydrogenation reactor;

    the regulation-level parameters comprise inlet MAPD concentration $C_{[MAPD]in}$, inlet hydrogen-to-acetylene ratio $C_{[C3H6]in/C[H2]in}$, temperature differences of each bed $TD_1$-$TD_n$ of the C3 liquid-phase hydrogenation reactor; and

    the target-level parameters comprise outlet MAPD concentration $C_{[MAPD]out}$ and propylene selectivity SE of the C3 liquid-phase hydrogenation reactor.

7.  The control device of the reactor according to claim 6, wherein:

    The target preset range of the outlet MAPD concentration $C_{[MAPD]out}$ is $x \pm (x \cdot y\%)$ ppm, and the target preset range of the propylene selectivity SE is SE≥S'-5%;

    Wherein S' is the optimal propylene selectivity value that can be obtained when the MAPD concentration is within the range of $x \pm (x \cdot y\%)$ ppm;

    When the above conditions are not met, the regulation-level variables are adjusted.

8.  The control device according to any one of claims 1-3, wherein obtaining the multi-level parameters of the reactor includes obtaining the input and output parameters of the reactor and determining the multi-level parameters based on the input and output parameters.

9.  The control device according to claim 7, wherein:

    the expected value of the inlet MAPD, INMAPD, is calculated by the dynamic matrix predictive control algorithm, in response to the inlet MAPD concentration being within INMAPD±0.02mol%, the manipulation-level variables are not adjusted, and in response to the inlet MAPD concentration not being within INMAPD±0.02mol%, at least one of the fresh material flow rate, recycle material flow rate, top reflux flow rate of the depropanizer, and depropanizer pressure of the manipulation-level variables is adjusted;

    the expected value of the hydrogen-to-acetylene ratio, HM, is calculated by the dynamic matrix predictive control algorithm, in response to the hydrogen-to-acetylene ratio being within HM±0.025, the manipulation-level variables are not adjusted, and in response to the hydrogen-to-acetylene ratio not being within HM±0.025, at least one of the fresh material flow rate, inlet hydrogen flow rate, and recycle material flow rate of the manipulation-level variables is adjusted; and

the expected value of the bed temperature difference, TD, is calculated by the dynamic matrix predictive control algorithm, in response to the bed temperature difference being within TD±1°C, the manipulation-level variables are not adjusted, and in response to the bed temperature difference not being within TD±1°C, at least one of the inlet material temperature and the pressure of the C3 liquid-phase hydrogenation reactor of the manipulation-level variables is adjusted.

10. A control system, comprising:

a reactor; and
The control device according to any one of claims 1-9.

11. The control system according to claim 10, further comprising:
a DCS controller configured to obtain input and output parameters from the reactor.

12. The control system according to claim 11, further comprising:
an OPC server configured to realize communication between the DCS controller and the control device.

13. A control method for a reactor, comprising:

obtaining multi-level parameters of a reactor which comprise manipulation-level parameters, regulation-level parameters, and target-level parameters;
in response to the target-level parameters not being within a target preset range, determining an expected regulation range of the regulation-level parameters based on the target-level parameters and the target preset range;
determining an expected manipulation range of the manipulation-level parameters based on the expected regulation range of the regulation-level parameters; and
controlling the manipulation-level parameters to fall within the manipulation expected range, thereby controlling the regulation-level parameters to fall within the regulation expected range, and ultimately controlling the target-level parameters to fall within the target preset range.

14. The method according to claim 13, wherein:

the relationship between the regulation-level parameters and the target-level parameters is defined by a first-level function, such that the target-level parameters can be adjusted by controlling the values of the regulation-level parameters; and
the relationship between the manipulation-level parameters and the regulation-level parameters is defined by a second-level function, such that the regulation-level parameters can be adjusted by controlling the values of the manipulation-level parameters.

15. The control method according to claim 14, wherein the regulation-level parameters further comprise at least two levels of regulation parameters, and the relationship between the at least two levels of regulation parameters is defined by a function.

16. The method according to any one of claims 13-15, further comprising:
implementing the dynamic process adjustment of multi-level variables based on the dynamic matrix predictive control algorithm.

17. The method according to claim 16, wherein the reactor is a C3 liquid-phase hydrogenation reactor.

18. The method according to claim 17, wherein:

the manipulation-level parameters comprise inlet temperature $T_{in}$, inlet hydrogen flow rate $F_{H2}$, fresh material flow rate $F_{frs}$, recycle material flow rate $F_{rec}$, top reflux flow rate $F_{tow}$ of the depropanizer, depropanizer pressure $P_{tow}$, C3 hydrogenation reactor pressure P of the C3 liquid-phase hydrogenation reactor;
the regulation-level parameters comprise inlet MAPD concentration $C_{[MAPD]in}$, inlet hydrogen-to-acetylene ratio $C_{[C3H6]in/C[H2]in}$, temperature differences of each bed $TD_1$-$TD_n$ of the C3 liquid-phase hydrogenation reactor; and
the target-level parameters comprise outlet MAPD concentration $C_{[MAPD]out}$ and propylene selectivity SE of the C3 liquid-phase hydrogenation reactor.

19. The method according to claim 18, wherein:

The target preset range of the outlet MAPD concentration $C_{[MAPD]out}$ is $x \pm (x \cdot y\%)$ ppm, and the target preset range of the propylene selectivity SE is $SE \geq S'\text{-}5\%$;
Wherein S' is the optimal propylene selectivity value that can be obtained when the MAPD concentration is within the range of $x \pm (x \cdot y\%)$ ppm;
When the above conditions are not met, the regulation-level variables are adjusted.

20. The method according to any one of claims 13-15, wherein
obtaining the multi-level parameters of the reactor comprises obtaining the input and output parameters of the reactor and determining the multi-level parameters based on the input and output parameters.

21. The method according to claim 19, wherein:

the expected value of the inlet MAPD, INMAPD, is calculated by the dynamic matrix predictive control algorithm, in response to the inlet MAPD concentration being within INMAPD±0.02mol%, the manipulation-level variables are not adjusted, and in response to the inlet MAPD concentration not being within INMAPD±0.02mol%, at least one of the fresh material flow rate, recycle material flow rate, top reflux flow rate of the depropanizer, and depropanizer pressure of the manipulation-level variables is adjusted;
the expected value of the hydrogen-to-acetylene ratio, HM, is calculated by the dynamic matrix predictive control algorithm, in response to the hydrogen-to-acetylene ratio being within HM±0.025, the manipulation-level variables are not adjusted, and in response to the hydrogen-to-acetylene ratio not being within HM±0.025, at least one of the fresh material flow rate, inlet hydrogen flow rate, and recycle material flow rate of the manipulation-level variables is adjusted; and
the expected value of the bed temperature difference, TD, is calculated by the dynamic matrix predictive control algorithm, in response to the bed temperature difference being within TD±1°C, the manipulation-level variables are not adjusted, and in response to the bed temperature difference not being within TD±1°C, at least one of the inlet material temperature and the pressure of the C3 liquid-phase hydrogenation reactor of the manipulation-level variables is adjusted.

22. A machine-readable storage medium, comprising a computer program stored thereon, wherein the computer program comprises executable instructions, which when executed by a processor, implement the method according to any one of claims 13-21.

23. A computer program product, comprising executable instructions which when executed by a processor, implement the method according to any one of claims 13-21.

Input

Reactor110

DCS controller 120

OPC server 130

Control server140

Output

FIG. 1

obtaining the input and output parameters
of the controlled object
210

calculating multi-level parameters based
on the input and output parameters 220

target-level variable
within preset range?
230

Y

N

determining the expected value of the
regulation-level 240

determining the expected value of the
manipulation-level 250

FIG. 2

```
┌─────────────────────────────┐              ┌─────────────────────────────────┐
│  target-level parameters 310│              │  first regulation-level parameter│
│                             │              │              321                │
└─────────────────────────────┘              └─────────────────────────────────┘
              │                                               │
              │  first-level                                  │  transfer function
              │  transfer function                            ▼
              ▼                               ┌─────────────────────────────────┐
┌─────────────────────────────┐              │ second regulation-level parameter│
│ regulation-level parameters │──────────    │              322                │
│              320            │          ╲   └─────────────────────────────────┘
└─────────────────────────────┘           ╲                  ⋮
              │                            ╲  ┌─────────────────────────────────┐
              │  second-level               ╲ │  Nth regulation-level parameter │
              │  transfer function          ╱ │              32N                │
              ▼                            ╱  └─────────────────────────────────┘
┌─────────────────────────────┐          ╱
│ manipulation-level parameters│─────────
│              330            │
└─────────────────────────────┘
```

FIG. 3

basic-layer
manipulation-level
variable

Inlet Hydrogen
Flow Rate

Inlet
Temperature

Fresh Material
Flow Rate

Recycle Material
Flow Rate

Top Reflux Flow
Rate of
Depropanizer

Reactor
pressure

intermediate
regulation-level
variable

Inlet MAPD
concentration

Hydrogen-to-
Acetylene
Ratio

Bed
Temperature
Difference

upper-layer target-
level variable

Outlet MAPD
concentration

propylene
selectivity

FIG. 4

FIG. 5

FIG. 6A

FIG. 6B

FIG. 6C

FIG. 6D

## INTERNATIONAL SEARCH REPORT

| International application No. |
| --- |
| **PCT/CN2023/118464** |

### A.   CLASSIFICATION OF SUBJECT MATTER

G05B13/04(2006.01)i

According to International Patent Classification (IPC) or to both national classification and IPC

### B.   FIELDS SEARCHED

Minimum documentation searched (classification system followed by classification symbols)

IPC:G05B

Documentation searched other than minimum documentation to the extent that such documents are included in the fields searched

Electronic data base consulted during the international search (name of data base and, where practicable, search terms used)

CNABS, CNTXT, CNKI: 控制, 监控, 反应器, 多层, 多级, 目标层, 调控层, 操纵层, 预设范围, 标准, 预期, 执行, 函数关系, 动态矩阵预测, 碳三液相加氢, 入口温度, 流量, 压力, 浓度, 丙烯选择性, 服务器; VEN, USTXT, WOTXT, JPTXT, EPTXT, ELSEVIER: control, monitor, reactor, multilayer, multistage, target layer, regulatory layer, handle layer, preset range, criteria, expectation, execution, functional relationship, dynamic matrix prediction, carbon three liquid phase hydrogenation, inlet temperature, flow, pressure, concentration, propylene selectivity, server

### C.   DOCUMENTS CONSIDERED TO BE RELEVANT

| Category* | Citation of document, with indication, where appropriate, of the relevant passages | Relevant to claim No. |
| --- | --- | --- |
| Y | CN 108733009 A (EAST CHINA UNIVERSITY OF SCIENCE AND TECHNOLOGY) 02 November 2018 (2018-11-02)<br>    description, paragraphs 3-150, and figures 1-2 | 1-23 |
| Y | CN 113721683 A (CHINA PETROLEUM & CHEMICAL CORP. et al.) 30 November 2021 (2021-11-30)<br>    description, paragraphs 9-105, and figures 1-4c | 1-23 |
| Y | CN 113713720 A (CHINA PETROLEUM & CHEMICAL CORP. et al.) 30 November 2021 (2021-11-30)<br>    description, paragraphs 9-131, and figures 1-4 | 1-23 |
| Y | CN 113736514 A (CHINA PETROLEUM & CHEMICAL CORP. et al.) 03 December 2021 (2021-12-03)<br>    description, paragraphs 9-122, and figures 1-4d | 1-23 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 November 2023** | **23 November 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/118464** |

**C.  DOCUMENTS CONSIDERED TO BE RELEVANT**

| Category* | Citation of document, with indication, where appropriate, of the relevant passages | Relevant to claim No. |
| --- | --- | --- |
| A | CN 114426452 A (CHINA PETROLEUM & CHEMICAL CORP. et al.) 03 May 2022 (2022-05-03)<br>  entire document | 1-23 |
| A | CN 113741565 A (CHINA PETROLEUM & CHEMICAL CORP. et al.) 03 December 2021 (2021-12-03)<br>  entire document | 1-23 |
| A | CN 113703314 A (CHINA PETROLEUM & CHEMICAL CORP. et al.) 26 November 2021 (2021-11-26)<br>  entire document | 1-23 |
| A | KR 20190058075 A (HANWHA CHEMICAL CORP.) 29 May 2019 (2019-05-29)<br>  entire document | 1-23 |

Form PCT/ISA/210 (second sheet) (July 2022)

**INTERNATIONAL SEARCH REPORT**
Information on patent family members

International application No.

**PCT/CN2023/118464**

| Patent document cited in search report | | | Publication date (day/month/year) | Patent family member(s) | | | Publication date (day/month/year) |
|---|---|---|---|---|---|---|---|
| CN | 108733009 | A | 02 November 2018 | CN | 108733009 | B | 09 April 2021 |
| CN | 113721683 | A | 30 November 2021 | CN | 113721683 | B | 19 August 2022 |
| CN | 113713720 | A | 30 November 2021 | None | | | |
| CN | 113736514 | A | 03 December 2021 | CN | 113736514 | B | 30 May 2023 |
| CN | 114426452 | A | 03 May 2022 | None | | | |
| CN | 113741565 | A | 03 December 2021 | None | | | |
| CN | 113703314 | A | 26 November 2021 | None | | | |
| KR | 20190058075 | A | 29 May 2019 | KR | 102275691 | B1 | 09 July 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113721683 A